# FASCICULE DE BREVET EUROPEEN

(11) **EP 3 256 291 B1**
(45) Date de publication et mention de la délivrance du brevet: **20.06.2018**
(21) Numéro de dépôt: 17725656.7
(22) Date de dépôt: 20.04.2017
(51) Int. Cl.: B25J 9/00, B25J 9/10

(54) **STATION DE DÉPÔT D'UN CORDON DE MATIÈRE SUR UN COUVERCLE ET/OU UN FOND**
STATION ZUR ABLAGERUNG EINES MATERIALSTREIFENS AUF EINER ABDECKUNG UND/ODER EINEM FUNDAMENT
STATION FOR DEPOSITING A STRIP OF MATERIAL ONTO A COVER AND/OR A BASE

(30) Priorité: 21.04.2016 FR 1653530
(43) Date de publication de la demande: 20.12.2017
(73) Titulaire: SABATIER S.A.S, 13127 VITROLLES (FR)
(72) Inventeur: PELLEGATTA, Jean louis, 83470 Seillon Source D'Argens (FR)
(74) Mandataire: Derambure Conseil
(86) Numéro de dépôt international: PCT/FR2017/050936
(87) Numéro de publication internationale: WO 2017/182756

(56) Documents cités:
- EP-A1- 2 954 985
- JP-A- 2006 346 699
- US-A1- 2011 113 914

## Description

### Domaine de l'invention

La présente invention est relative au domaine de la fabrication de récipients et emballages métalliques. De tels récipients et emballages sont utilisés dans l'industrie sous de nombreux formats pour le conditionnement de produits alimentaires ou de produits industriels tels que peintures, huiles, solvants et produits chimiques divers ou autres.

De tels récipients et emballages peuvent être à ouverture totale; on les appelle alors génériquement des "seaux", ou bien fermés, auquel cas on parle généralement « d'emballages 3 pièces", ainsi que de bidons ou de touques. Les seaux sont composés d'un corps à une extrémité duquel est serti un fond et dont l'autre extrémité est totalement ouverte. Les bidons (emballages 3 pièces) sont composés d'un corps aux extrémités duquel sont respectivement sertis un fond et un couvercle.

La présente invention a plus particulièrement pour objet une station de dépôt d'un cordon de matière, formant un joint d'étanchéité, sur un couvercle et/ou un fond. Par la suite, on fera référence au « fond », étant entendu que la discussion peut également être appliquée au cas du couvercle qui, du fait de la forme généralement cylindrique du corps, c'est-à-dire délimité par une surface cylindrique et par deux plans strictement parallèles, présente la même forme que le fond.

### Contexte de l'invention

Un assemblage étanche est le plus souvent nécessaire entre le corps et le fond. Pour réaliser un tel assemblage étanche, on a coutume d'appliquer sur le fond un matériau fluide destiné à solidifier pour former un joint d'étanchéité. Ce matériau est appliqué selon une géométrie correspondant à la forme générale qu'on veut donner au joint, qui correspond généralement au contour périphérique du fond. Actuellement, cette étape est généralement mise en oeuvre avec un procédé de type tamponnage (correspondant à l'expression anglaise « die lining » classiquement utilisée dans le métier), dans lequel une matrice présentant une forme bidimensionnelle correspondant à celle du fond est placée en regard du fond pour appliquer en une fois le matériau en question sur le fond.

Une problématique de cette technologie est que l'installation de tamponnage ne peut être utilisée que pour une forme donnée de fond. En effet, la matrice portant le matériau présente la forme souhaitée pour le joint. Ceci contraint l'utilisateur à disposer d'une station de dépôt pour chaque forme de fond à produire.

Une technique alternative est un système à tête d'aiguilles (correspondant à l'expression anglaise « shower head » classiquement utilisée dans le métier), dans lequel une pluralité d'aiguilles présentant une forme bidimensionnelle correspondant à celle du joint d'étanchéité est placée en regard du fond, chaque aiguille appliquant une portion du joint d'étanchéité. Toutefois, cette technologie souffre des mêmes problèmes que la précédente; elle ne peut être utilisée que pour une forme donnée de fond.

Une technique alternative est un système de jointage au pistolet (correspondant à l'expression anglaise « copy lining » classiquement utilisée dans le métier). Selon cette variante, une buse d'application du matériau est déplacée dans un plan selon une trajectoire prédéterminée correspondant à la géométrie souhaitée pour le joint. Le déplacement de la douchette est guidé par un système à came. Toutefois, cette technologie souffre des mêmes problèmes que les précédentes, car la came est usinée une fois pour toute pour une forme donnée.

Il existe donc un besoin de rendre plus flexible ces stations de dépôt, pour qu'une même station de dépôt puisse s'adapter à différentes formes de « seaux » ou « bidons » afin d'en améliorer l'amortissement ou encore qu'une même station de dépôt puisse s'adapter à une modification du comportement rhéologique du matériau composant le joint, tel que lors d'un changement de fourniture de joint.

On connait des stations équipées de robots dits « delta » adaptés pour appliquer un joint sur un fond et/ou un couvercle destiné à un récipient métallique, tels que par exemple ceux décrits dans le document EP2954985 ; Chaque robot comprend trois paires de bras reliées, avec un écart angulaire de 120°, à une plateforme équipée d'une buse d'injection permettant d'appliquer le joint. L'intérêt de cette technologie est que la trajectoire de dépôt est précise, qu'elle peut être définie informatiquement, et qu'elle peut être modifiée sans modification matérielle substantielle.

Toutefois, de telles stations présentent un agencement complexe, coûteux, et particulièrement encombrant. La présente invention a notamment pour but de pallier ces inconvénients.

### Exposé de l'invention

À cet effet, l'invention propose principalement une station de dépôt d'un cordon de matière sur un couvercle et/ou un fond destiné à un récipient métallique, ladite station comprenant :
- un dispositif de transfert adapté pour déplacer les couvercles ou fonds selon une première direction, et
- un robot parallèle comprenant un support, deux bras articulés montés rotatifs sur le support, deux actionneurs, chacun des actionneurs étant adapté pour entrainer en rotation l'un des bras articulés, une nacelle montée rotative sur les bras articulés, au moins une buse d'injection solidaire de la nacelle, l'au moins une buse s'étendant selon une direction verticale perpendiculaire à la première direction et étant adaptée pour déposer un cordon de matériau susceptible de former un joint d'étanchéité sur le couvercle et/ou le fond sous-jacent déplacé par le dispositif de transfert,
dans lequel l'un des deux bras est monté rotatif autour d'un premier axe sur le support et l'autre des deux bras est monté rotatif autour d'un deuxième axe sur le support, le premier axe et le deuxième axe étant parallèles à la direction verticale,
dans lequel ladite nacelle est mobile en translation par rapport au support selon la première direction et selon une deuxième direction, perpendiculaire à la première direction et à la direction verticale, et solidaire en translation par rapport au support selon la direction verticale,
et dans lequel la station de dépôt comprend en outre un processeur commandant le robot, selon au moins une trajectoire continue dans un plan, comprenant la première direction et la deuxième direction, stockée dans ledit processeur.

Grâce à ces dispositions, la station de dépôt d'un cordon de matière sur un couvercle et/ou un fond destiné à un récipient métallique présente un volume d'encombrement plus restreint. Le nombre d'articulations du robot est diminué, sans diminuer la précision, la vitesse, la régularité du dépôt de cordon de matière ou l'efficacité et la robustesse de celui-ci, permettant une réduction importante de l'encombrement et du coût de ce dernier. De plus, le processeur permet d'adapter la trajectoire de dépôt sur un même fond pour compenser une modification du comportement rhéologique du matériau composant le joint, ou sur différents fonds pour compenser une modification de forme desdits fonds, augmentant la flexibilité de la station.

Dans divers modes de réalisation de la station de dépôt d'un cordon de matière, on peut éventuellement avoir recours à l'une et/ou à l'autre des dispositions suivantes :
- le processeur commande l'au moins une buse d'injection du robot à une vitesse linéaire constante ; Ainsi le cordon de matière est déposé uniformément ;
- chaque bras articulé du robot comprend une bielle proximale montée rotative sur le support et une partie distale s'étendant entre une première extrémité et une deuxième extrémité, la partie distale étant liée par une liaison pivot à au moins un élément parmi la bielle proximale et la nacelle ; L'utilisation d'une liaison pivot permet d'augmenter la résistance à l'usure des bras articulés du robot et de réduire le jeu au niveau des articulations ;
- la première extrémité de la partie distale comprend un premier orifice circulaire, et dans lequel la bielle proximale s'étend entre une tête et un pied présentant un alésage circulaire, la liaison pivot assurant la liaison entre la partie distale et la bielle proximale étant réalisée par un premier boulon traversant le premier orifice de la partie distale et l'alésage de la bielle proximale, Ainsi, la liaison pivot est réalisée avec un encombrement et un coût réduit ;
- la deuxième extrémité de la partie distale comprend un deuxième orifice circulaire, et dans lequel la nacelle comprend au moins un manchon s'étendant sensiblement selon la direction verticale, la liaison pivot assurant la liaison entre la partie distale et la nacelle étant réalisée par un deuxième boulon traversant le deuxième orifice de la partie distale et l'au moins un manchon de la nacelle ; Ainsi, la liaison pivot est réalisée avec un encombrement et un coût réduit ;
- au moins l'une parmi la liaison pivot assurant la liaison entre la partie distale et la bielle proximale et la liaison pivot assurant la liaison entre la partie distale et la nacelle comprend en outre au moins un palier à roulement ; L'utilisation d'un palier à roulement permet d'augmenter la résistance à l'usure des bras articulés du robot et de réduire le jeu au niveau des articulations ; Il permet également de varier les types de palier (à billes, à rouleaux ou à aiguilles) ;
- la partie distale de chaque bras articulé du robot comprend deux montants symétriques s'étendant chacun entre une première extrémité et une deuxième extrémité, la première extrémité de chaque montant comprenant un premier orifice circulaire et la deuxième extrémité de chaque montant comprenant un deuxième orifice circulaire ; ainsi, la partie distale présente un poids moindre lui permettant de mieux résister aux forces centrifuges subies par le bras dans le plan comprenant la première direction Y et la deuxième direction X; ces forces centrifuges sont dues à la géométrie des fonds et aux accélérations qui en découlent pour maintenir une vitesse linéaire constante de la buse d'injection afin de garder une bonne précision de dépôt de joint;
- le robot comprend en outre au moins un bras secondaire articulé monté rotatif sur le support, ledit bras secondaire comprenant une barre de liaison solidarisant en translation le bras secondaire à l'un des bras principaux articulés du robot ; Ainsi le bras principal entraine le bras secondaire et ce dernier effectue exactement les mêmes déplacements que le bras principal, cela permet de rendre opérationnel le bras secondaire avec un minimum de pièces afin de traiter plus de fonds et/ou couvercles en parallèles, augmentant ainsi la productivité du robot tout en limitant son coût et son encombrement;
- le robot comprend en outre deux actionneurs, chacun des actionneurs étant adapté pour entrainer en rotation uniquement l'un des bras principaux articulés ;
- le dispositif de transfert comprend une pluralité de rangées parallèles convoyant chacune des fonds et/ou des couvercles selon la première direction, et dans lequel le robot une buse d'injection par rangée ; un robot unique peut traiter efficacement plusieurs rangées en parallèles, augmentant la productivité du robot tout en limitant son coût et son encombrement ;
- la nacelle du robot comprend une embase et au moins une accroche vissée à l'embase, ladite au moins une accroche étant adaptée pour solidariser l'au moins une buse d'injection à l'embase ; Ainsi, il est facile de retirer et de remplacer la buse d'injection de la nacelle en cas de problème avec celle-ci ;

### Brève description des figures

D'autres caractéristiques et avantages de l'invention apparaîtront au cours de la description détaillée suivante, se référant aux dessins annexés dans lesquels :
- la figure la est une vue de face d'une station de dépôt d'un cordon de matière sur un couvercle et/ou un fond destiné à un récipient métallique selon l'art antérieur,
- la figure 1b est une vue en perspective d'un récipient métallique,
- la figure 2 une vue en perspective d'un robot selon l'invention pouvant équiper la station de dépôt de la figure 1a,
- la figure 3 est une vue en perspective du robot de la figure 2, vu par en dessous,
- la figure 4a est une vue partielle du robot de la figure 2 comprenant deux paires de bras principaux,
- la figure 4b est une vue partielle du robot de la figure 2 comprenant deux paires de bras principaux et deux paires de bras secondaires, dans une première position,
- la figure 4c est une vue partielle du robot de la figure 2 comprenant deux paires de bras principaux et deux paires de bras secondaires, dans une deuxième position,
- La figure 5 est une vue en perspective d'une paire de bras principaux et d'une paire de bras secondaires,

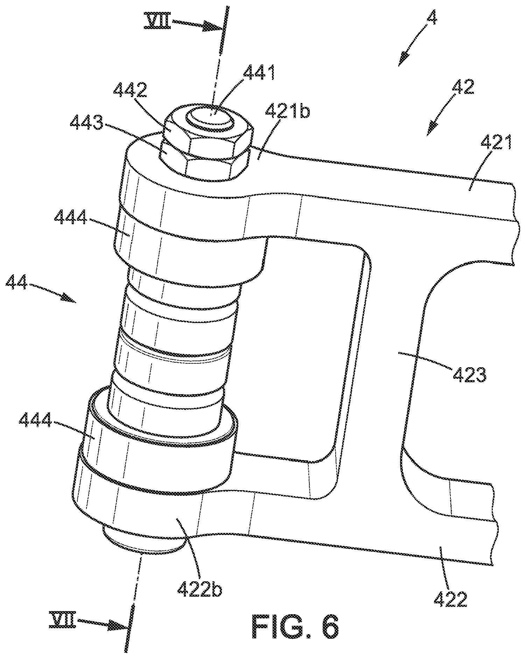

- la figure 6 est un agrandi de la zone VI repérée à la figure 5,

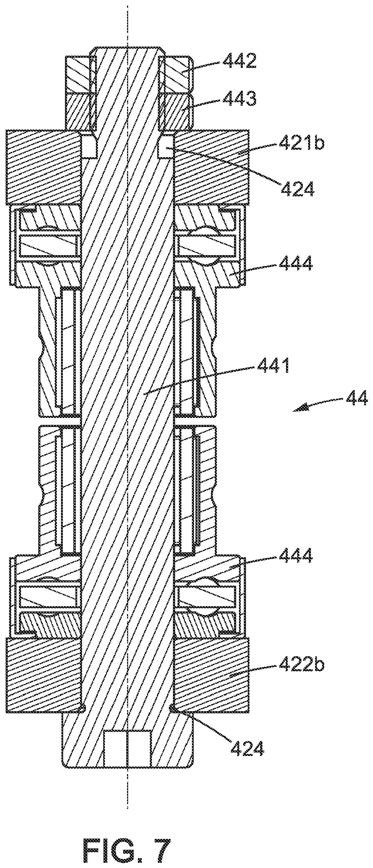

- la figure 7 est une vue de dessus selon le plan de coupe repéré VII-VII à la figure 6,
- les figures 8a et 8b sont deux représentations schématiques du mouvement du robot de la figure 2 comprenant deux paires de bras principaux et deux paires de bras secondaires.

### Description détaillée de l'invention

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par souci de clarté, seuls les éléments utiles à la compréhension des modes de réalisation décrits ont été représentés et seront détaillés.

La figure la représente une station **1** de dépôt d'un cordon de matière, pouvant également être appelée station de jointage. Le cordon de matière peut être en polymère, plus particulièrement en élastomère tel que le caoutchouc. Le cordon de matière est adapté pour former un joint permettant de faire une étanchéité entre deux éléments.

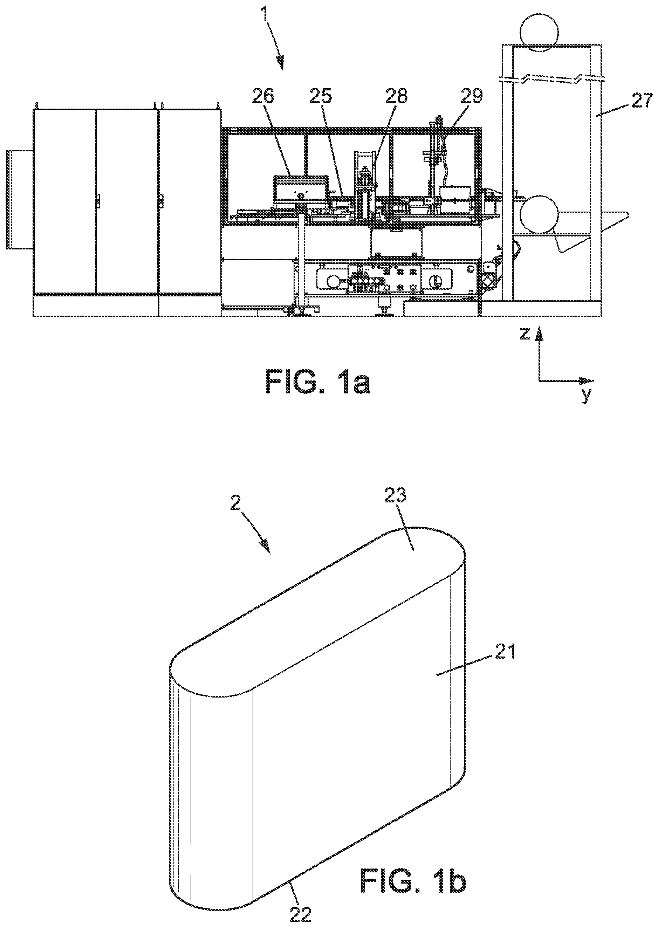

La station 1 est adaptée pour s'intégrer dans une ligne de fabrication (non représentée) des fonds **22** et/ou des couvercles **23** pour récipients **2** métalliques telle que connue de l'état de la technique. Cette ligne de fabrication est composée de postes individuels agencés de façon modulaire les uns à la suite des autres pour réaliser les opérations de formage et de jointage des fonds 22 et/ou des couvercles 23 pour récipients 2 tels que des seaux et bidons métalliques. Chaque récipient 2, comme représenté à la figure 1b, comprend un corps **21** en forme de prisme (parallélépipède, cube, prismane...) ou de cylindre (droit ou non, de section circulaire, ovale, semi-circulaire ou quelconque...). Chaque récipient 2 comprend en outre un fond 22, voire un couvercle 23 présentant une forme complémentaire à celle de la section du corps 21 à savoir rectangulaire, circulaire, ovale, semi-circulaire ou quelconque.

La ligne de fabrication peut comprendre, outre la station 1 de dépôt d'un cordon de matière, une station de mise en forme, par exemple par emboutissage, dans laquelle les fonds 22 et/ou les couvercles 23 sont mis en forme et un tapis de transfert amenant les fonds 22 et/ou les couvercles 23 mis en forme à un dispositif d'empilement de ceux-ci.

Plus particulièrement, la station de dépôt d'un cordon de matière représentée à la figure la est un exemple de station de jointage par pistolet connue. Elle comprend un dispositif **25** de transfert desservant un dispositif de dépilement **26,** un dispositif d'ourlage **28** et un pistolet **29** de dépôt de joint, et un dispositif d'étagement de sortie **27**, également appelé four à poches. Un temps de séchage de quelques heures, par exemple d'au moins vingt-quatre heures est mis en place pour les fonds 22 et/ou couvercles 23 après dépôt du cordon de matière.

La station 1 de dépôt d'un cordon de matière selon l'invention comprend le dispositif 25 de transfert, le dispositif de dépilement 26, le dispositif d'étagement de sortie 27 et un robot **3.** La station 1 peut en outre comprendre le dispositif d'ourlage 28. Toutefois, en variante, l'ourlage est réalisé dans une autre station de la ligne de fabrication de récipients que la station 1.

Le dispositif 25 de transfert est adapté pour transporter les fonds 22 et/ou les couvercles 23 selon une première direction **Y.** Le dispositif 25 de transfert est adapté pour amener les fonds 22 et/ou couvercles 23 sous le robot 3 puis pour les retirer de sous le robot 3. Le dispositif 25 de transfert comprend un tapis, par exemple roulant sans fin. Le tapis roulant comprend une surface de convoyage sur laquelle sont disposés les fonds 22 et/ou les couvercles 23, pour être déplacés en translation selon la première direction Y, et une surface inférieure opposée.

Le dispositif 25 de transfert peut-être pas-à-pas. Ce cas permet également d'intégrer dans la station 1 un dispositif d'ourlage 28. Le dispositif 25 de transfert comprend un tapis **25a** et des pinces articulées. Le tapis 25a comprend une surface de convoyage **25b** sur laquelle sont disposés les fonds 22 et/ou les couvercles 23. Les pinces articulées sont adaptées pour saisir et déplacer en translation selon la première direction Y les fonds 22 et/ou les couvercles 23 sur la surface de convoyage 25b. Les fonds 22 et/ou les couvercles 23 sont, par exemple, disposés sur la surface de convoyage 25b en une unique rangée **25c** de fonds 22 et/ou de couvercles 23. Optionnellement, les fonds 22 et/ou les couvercles 23 sont disposés sur la surface de convoyage 25b en une pluralité de rangées 25c parallèles. Chaque fond 22 et/ou couvercle 23 peut être espacé des autres, parallèlement à la première direction Y. Cet espacement entre les différents fonds 22 et/ou couvercles 23 permet une meilleure maniabilité des fonds 22 et/ou des couvercles 23 par les pinces articulées de façon à faciliter les opérations de dépôt du cordon de matière.

Alternativement, le dispositif 25 de transfert peut être continu. Un tel dispositif 25 de transfert est asservi avec une précision du même ordre de grandeur que l'asservissement du robot 3, par exemple le temps d'asservissement est de l'ordre de 0,5 millisecondes, garantissant la synchronisation du déplacement des fonds 22 et/ou les couvercles 23 fabriqués devant le robot 3 de la station 1 avec l'opération du robot 3, et conduisant à une simplification mécanique de la station 1, ainsi qu'à un gain de place important.

Dans l'une ou l'autre de ces variantes, le dispositif 25 de transfert peut en outre être adapté pour sortir les fonds 22 et/ou couvercles 23 du dispositif de dépilement 26 et pour faire entrer les fonds 22 et/ou couvercles 23 dans le dispositif d'étagement de sortie 27.

Le dispositif de dépilement 26 est adapté pour stocker, par exemple par empilement successif selon une direction verticale **Z** sensiblement perpendiculaire à la première direction Y, les fonds 22 et/ou les couvercles 23 préfabriqués avant leur arrivée sur le dispositif 25 de transfert. Optionnellement, la station 1 comprend un dispositif de dépilement 26 pour chacune des rangées 25c du dispositif 25 de transfert.

Le dispositif d'étagement de sortie 27 est adapté pour stocker et pour sécher, par exemple par échelonnement, sans contact entre les différents fonds 22 et/ou couvercles 23 selon la direction verticale Z, les fonds 22 et/ou les couvercles 23 comprenant le cordon de matière non sec après leur passage sur le dispositif 25 de transfert. Le dispositif d'étagement de sortie 27 peut comprendre une partie chauffante afin de réduire le temps de séchage des cordons de matière. Cet étagement successif sans contact permet de laisser le temps au cordon de matière de sécher sans risque d'abimer celui-ci. Optionnellement, la station 1 comprend un dispositif de d'étagement de sortie 27 pour chacune des rangées 25c du dispositif 25 de transfert.

Le dispositif d'ourlage 28 est adapté pour ourler (rabattre) les bords des fonds 22 et/ou couvercles 23. Cette opération d'ourlage permet de réduire les risques de débordement de matière lors de l'application du cordon de matière, et est utile lors du sertissage desdits fonds 22 et/ou couvercles 23 sur le corps 21.

Le robot 3 est dit parallèle. On entend par robot parallèle un mécanisme en chaîne cinématique fermée dont l'organe terminal, agissant sur un outil, est relié à la base par plusieurs chaînes cinématiques, ou bras, indépendantes. Un tel robot présente une grande résistance et une précision importante.

Le robot 3 est adapté pour déposer un cordon de matière sur chacun des fonds 22 et/ou couvercle 23 sous-jacent déplacé par le dispositif 25 de transfert. Plus particulièrement, le cordon de matière déposé par le robot 3 est semi-liquide (visqueux) et est solidifiable, par exemple en quelques heures. Le cordon de matière déposé par le robot 3 est fin et continu. Le robot 3 dépose de l'ordre de 0,05 à 1 gramme de matière par fond 22 et/ou couvercle 23.

Le robot 3 comprend un support **31**, au moins une buse d'injection **32**, deux actionneurs **33,** deux bras **4** articulés, et une nacelle **5.**

Le support 31 du robot 3 peut présenter une forme sensiblement plane définissant un plan **P** comprenant la première direction Y et une deuxième direction **X,** sensiblement perpendiculaire à la première direction Y et à la direction verticale Z. Le support 31 s'étend selon la deuxième direction X entre une première extrémité **31a** et une deuxième extrémité **31b** et selon la première direction Y entre une première extrémité latérale **31c** et une deuxième extrémité latérale **31d.** Le support 31 comprend en outre une surface supérieure **31e** et une surface inférieure **31f** opposée. Le support 31 est destiné à être fixé par tout moyen approprié sur une structure porteuse (non représentée) de la station 1, telle qu'un plafond.

Selon des variantes non représentées, le support 31 présente une forme générale sensiblement rectangulaire, ou bien encore non plane.

L'au moins une buse d'injection 32 s'étend sensiblement selon la direction verticale Z. L'au moins une buse d'injection 32 peut être fixée sur la nacelle 5. L'au moins une buse d'injection 32 est adaptée pour déposer un cordon fin et continu de matériau sur le couvercle 22 et/ou le fond 23 sous-jacent déplacé par le dispositif 25 de transfert. La direction verticale Z est ici une direction d'injection. La buse d'injection 32 comprend un orifice d'environ 0,1 à 0,5 millimètres de diamètre.

Alternativement, le robot 3 comprend une pluralité de buses d'injection 32.

Plus particulièrement, le robot 3 est adapté pour déplacer la buse d'injection 32 en translation au-dessus des fonds 22 et/ou couvercles 23 selon deux des trois directions d'espace, par exemple la première direction Y et la deuxième direction X. La trajectoire 322 du déplacement de la buse d'injection 32 est continue et est compris dans un plan **X ;Y** parallèle au plan P. La trajectoire 322 peut comprendre des droites et être linéaire. Alternativement, la trajectoire 322 peut comprendre des courbes. Alternativement, la trajectoire 322 peut comprendre des droites et des courbes. La trajectoire 322 peut être répétitive et posséder une cadence d'exécution. Le déplacement de la buse d'injection 32 se fait avantageusement selon des mouvements rapides, par exemple de l'ordre de 100 à 200 cycles par minute.

Les deux actionneurs 33 sont fixés sur le support 31. Les deux actionneurs 33 peuvent être fixés au-dessus du support 31, par exemple par l'intermédiaire de systèmes vis-écrous **33a.** Les deux actionneurs 33 sont indépendants l'un de l'autre.

Les deux actionneurs 33 sont avantageusement sensiblement au centre de la surface supérieure 31e du support 31. Les deux actionneurs 33 étant sensiblement analogues l'un de l'autre structurellement, seul l'un des actionneurs 33 sera décrit en détail ci-après.

L'actionneur 33 comprend une armature **331** fixée sur le support 31, et un stator **332** solidaire de l'armature 331. L'actionneur 33 est propre à imprimer à l'un des bras 4 articulés un mouvement de rotation par rapport au support 31 autour d'un axe **R1** sensiblement perpendiculaire au plan P. L'axe R1 est par exemple sensiblement parallèle à la direction verticale Z.

Dans l'exemple représenté, le deuxième actionneur se déduit du premier actionneur. Ainsi, le deuxième actionneur 33 est adapté pour imprimer au deuxième bras 4 articulé un mouvement de rotation par rapport au support 31 autour d'un axe **R2** sensiblement perpendiculaire au plan P et sensiblement parallèle à l'axe R1.

Les actionneurs 33 peuvent être asservis. L'asservissement des actionneurs 33 est très dynamique afin de limiter au maximum l'écart entre la valeur réelle (obtenue) et la valeur de consigne (demandée). Le temps d'asservissement est d'environ 0,5 millisecondes, garantissant une bonne précision du robot 3. L'asservissement du robot 3 permet une précision de placement de la buse d'injection 32 d'environ 0,2 millimètres afin d'augmenter la précision du dépôt du cordon de matière sur les fonds 22 et/ou couvercles 23.

Les deux bras 4 articulés, également appelés bras 4 principaux, sont montés rotatifs sur le support 31. Plus particulièrement, les deux bras 4 articulés sont montés respectivement sur chacun des actionneurs 33. Les deux bras 4 articulés étant sensiblement analogues l'un de l'autre structurellement, seul l'un des bras 4 articulés sera décrit en détail ci-après.

Le bras 4 articulé comporte une bielle proximale **41** formant un arrière-bras, et une partie distale **42** articulée sur la bielle proximale et formant un avant-bras.

La bielle proximale 41 est montée rotative par rapport au stator 332 autour de l'axe R1. La bielle proximale 41 est de forme générale allongée, par exemple sensiblement perpendiculairement à l'axe R1. La bielle proximale 41 s'étendant entre une tête **411** et un pied **412.** La tête 411 peut comprendre un alésage **411a** central, par exemple circulaire, adapté pour solidariser en rotation la bielle proximale 41 au stator 332. Le pied 412 comprend un alésage **412a** central, par exemple circulaire, s'étendant selon l'axe R1.

La partie distale 42 est rigide et est, par exemple, réalisé en métal. La partie distale 42 comprend un montant unique de forme générale allongée, s'étendant entre une première extrémité et une deuxième extrémité. Le montant unique rigide de la partie distale 42 permet d'alléger le bras 4 du robot 3 afin que ce dernier absorbe mieux les forces centrifuges subies dans le plan X ;Y. Ces forces centrifuges sont dues à la géométrie des fonds et aux accélérations qui en découlent pour maintenir une vitesse linéaire constante de la buse d'injection 32 tout en gardant une bonne précision de dépôt de joint. La première extrémité peut comprendre un première orifice, par exemple circulaire, adapté pour solidariser en rotation la partie distale 42 à la bielle proximale 41. La deuxième extrémité comprend un deuxième orifice, par exemple circulaire, adapté pour solidariser en rotation la partie distale 42 à la nacelle 5.

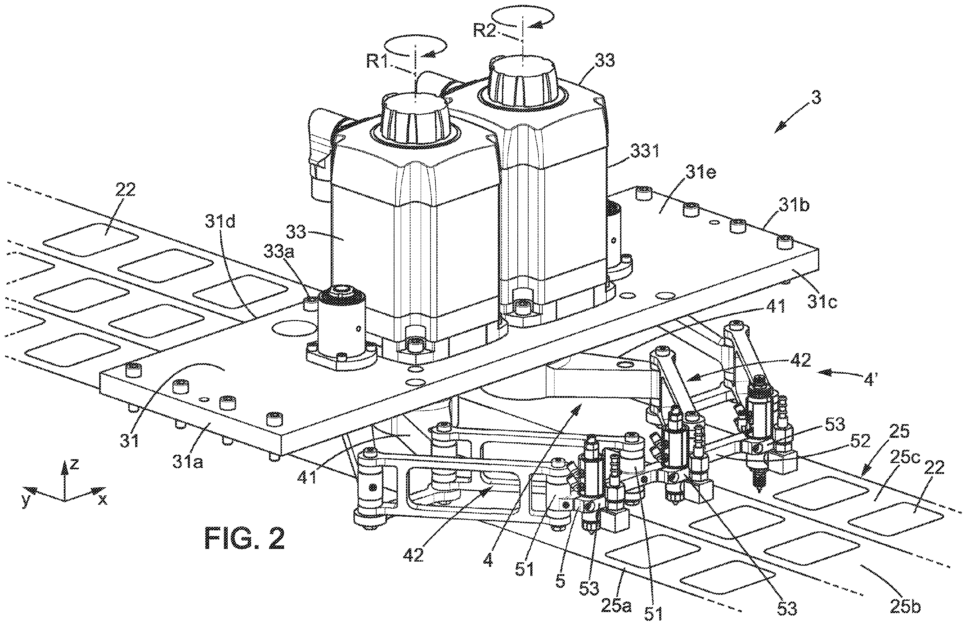

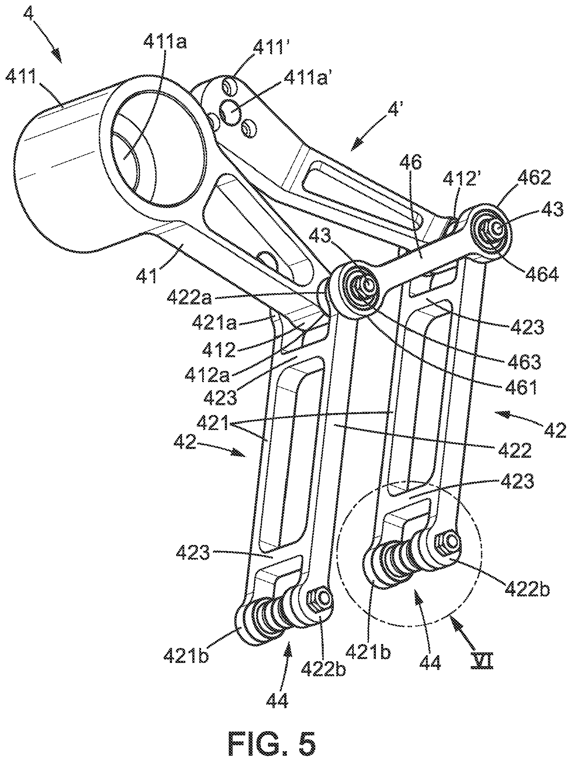

Alternativement, comme présenté aux figures 2 à 5, la partie distale 42 est composée de deux montants **421, 422** agencés sensiblement parallèlement l'un à l'autre. La partie distale 42 comprend en outre deux entretoises **423** reliant les deux montants 421, 422. Les entretoises 423 sont rigides. Les entretoises 423 peuvent être réalisées en métal. Les entretoises 423 sont adaptées pour maintenir les deux montants 421, 422 parallèles l'un à l'autre.

Les montants 421, 422 sont rigides. Les montants 421, 422 peuvent être réalisés en métal. Chaque montant 421, 422 s'étend entre une première extrémité 421a, 422a et une deuxième extrémité 421b, 422b. Les deux montant 421, 422 et les entretoises 423 rigides de la partie distale 42 permettent d'obtenir un bras 4 plus léger tout en maintenant sa rigidité à un niveau élevé afin que ce dernier absorbe les forces centrifuges subies dans le plan X;Y. Chacune des premières extrémités 421a, 422a comprend un premier orifice, par exemple circulaire. Chacune des deuxièmes extrémités 421b, 422b comprend un deuxième orifice **424**, par exemple circulaire.

Le bras 4 articulé comprend en outre un premier boulon **43** et un deuxième boulon **44.**

Le premier boulon 43 comprend une vis, un écrou et par exemple une rondelle. Le premier boulon 43 est adapté pour traverser le premier orifice de chacun des montants 421, 422 et l'alésage 412a du pied 412 de la bielle proximale 41, le tout formant une liaison pivot. Le bras 4 articulé peut en outre comprendre au moins un palier à roulement présent entre la vis et une paroi interne de l'alésage 412a du pied 412 de la bielle proximale 41 afin de réduire le jeu entre la vis d'une part et les montant 421, 422 et la bielle proximale 41 d'autre part et de renforcer la solidité de la liaison pivot. Dans l'exemple représenté, le bras 4 articulé comprend deux paliers à roulement pour cette liaison pivot. Le palier à roulement peut être de type à billes, à rouleaux ou encore à aiguilles. Ainsi, la partie distale 42 est mobile en rotation par rapport à la bielle proximale 41 autour d'un axe parallèle à l'axe R1.

Le deuxième boulon 44 comprend une vis **441**, un écrou **442** et par exemple une rondelle **443.** Le deuxième boulon 44 est adapté pour traverser le deuxième orifice 424 de chacun des montants 421, 422 et un manchon **51** de la nacelle 5, le tout formant une liaison pivot. le bras 4 articulé peut en outre comprendre au moins un palier à roulement **444** présent entre la vis 441 et une paroi interne du manchon 51 de la nacelle 5 afin de réduire le jeu entre la vis 441 d'une part et les montant 421, 422 et la nacelle 5 d'autre part et de renforcer la solidité de la liaison pivot. Dans l'exemple représenté, le bras 4 articulé comprend deux paliers à roulement 444 pour cette liaison pivot. Le palier à roulement 444 peut être de type à billes, à rouleaux ou encore à aiguilles. Ainsi, la partie distale 42 est mobile en rotation par rapport à la nacelle 5 autour d'un axe parallèle à l'axe R2.

Pour obtenir un dépôt de matière constant et uniforme, il est nécessaire de maintenir une vitesse linéaire constante de la buse d'injection 32 au-dessus desdits fonds 22 et/ou couvercles 23. Or, de par les formes géométriques desdits fonds 22 et/ou couvercles 23, maintenir une vitesse linéaire constante de la buse d'injection 32 entraine de fortes accélérations et/ou décélérations et de fortes forces centrifuges sources d'efforts importants sur le robot 3. Afin de réduire ces efforts, le robot 3 qui vient d'être décrit est particulièrement léger et rigide. Plus particulièrement, la rigidité et la légèreté des bras 4 du robot 3 lui permettent de présenter une forte inertie selon la direction verticale Z et une faible inertie selon la première direction Y et la deuxième direction X. Cette répartition des forces permet au robot 3 de résister auxdits phénomènes d'accélération et de décélération tout en maintenant une grande précision de trajectoire, par exemple de l'ordre de 0,2 millimètre, même à grande vitesse.

La disposition des actionneurs 33 par rapport aux bras 4 articulés permet de conserver la motorisation du robot 3 décalée dans le plan X ;Y par rapport aux bras 4 articulés. Le robot 3 conserve ainsi un accès facile à l'au moins une buse d'injection 32. En outre, le robot 3 peut comprendre des câbles d'alimentation en joint (non représentés) reliés à l'au moins une buse d'injection 32 et des câbles de commande de l'ouverture (non représentés). La disposition des actionneurs 33 par rapport aux bras 4 articulés permet d'aménager plus facilement ces câbles sur le robot 3 et de réduire les risques d'enchevêtrement entre eux.

Comme visible sur la figure 2, la nacelle 5 se situe à la deuxième extrémité 421b, 422b des bras 4 articulés. La nacelle 5 est montée rotative sur les bras 4 articulés. Plus particulièrement, la nacelle 5 est montée rotative sur la deuxième extrémité 421b, 422b des bras 4 articulés. La nacelle 5 est mobile en translation par rapport au support 31 selon la première direction Y et selon la deuxième direction X, et est solidaire en translation par rapport au support 31 selon la direction verticale Z, par exemple pendant le dépôt de matière.

La nacelle 5 possède une forme générale qui s'étend sensiblement parallèlement au plan P. La nacelle 5 est rigide. La nacelle 5 peut être réalisée en métal. La nacelle 5 comprend deux manchons 51. Chacun des manchons 51 s'étendant selon la direction verticale Z. Les manchons 51 sont adaptés pour coopérer avec les deuxièmes boulons 44 des bras 4 articulés afin de former une liaison pivot. Les manchons 51 sont adaptés pour solidariser en translation les bras 4 articulés à la nacelle 5. La nacelle 5 comprend en outre une embase **52** propre à servir de support pour la buse d'injection 32. La nacelle 5 peut en outre comprendre une accroche **53,** par exemple vissée sur l'embase 52, propre à solidariser la buse d'injection 32 à l'embase 52. La buse d'injection 32 est, par exemple, solidarisé à l'embase 52 à égale distance entre les deux manchons 51.

Optionnellement, le robot 3 peut comprendre un bras secondaire 4' articulé. Le bras secondaire 4' articulé est monté rotatifs sur le support 31. Le bras secondaire 4' articulés est structurellement sensiblement similaire au bras 4 principal articulé et ne sera pas décrit à nouveau en détail. Ce bras secondaire 4' articulé se distingue du bras 4 principal articulé par les points suivants :
Le bras secondaire 4' articulé comprend une bielle proximale secondaire **41'** formant un arrière-bras. La bielle proximale secondaire 41' est montée rotative par rapport au support 31 autour d'un axe R3, parallèle aux axes R1 et R2. La bielle proximale secondaire 41' est de forme générale allongée, par exemple sensiblement perpendiculairement à l'axe R3. La bielle proximale secondaire 41' s'étendant entre une tête **411'** et un pied **412'.** La tête 411 peut comprendre un alésage **411a'** central, par exemple circulaire, adapté pour solidariser en rotation autour de l'axe R3 la bielle proximale secondaire 41' au support 31. Le pied 412 comprend un alésage **412a'** central, par exemple circulaire, s'étendant selon l'axe R3. La bielle proximale secondaire 41' est sensiblement plus petite que la bielle proximale 41 du bras 4 principale articulé.

Le bras secondaire 4' articulé peut en outre comprendre une barre de liaison **46.** La barre de liaison 46 s'étend entre une première extrémité **461** et une deuxième extrémité **462.** La première extrémité 461 comprend un premier alésage **463** central, par exemple circulaire. La deuxième extrémité 462 comprend un deuxième alésage **464** central, par exemple circulaire. La barre de liaison 46 lie en translation un des bras 4 principaux articulés au bras secondaire 4' articulé.

Plus particulièrement, le premier boulon 43 du bras 4 principal est en outre adapté pour traverser le premier alésage 463 de la barre de liaison 46, le tout formant une liaison pivot. Le premier boulon 43 du bras secondaire 4' est adapté pour traverser le premier orifice de chacun des montants 421, 422, l'alésage 412a' du pied 412' de la bielle secondaire proximale 41' et le deuxième alésage 464 de la barre de liaison 46, le tout formant une liaison pivot. Ainsi, la partie distale 42 du bras secondaire 4' est mobile en rotation par rapport à la bielle secondaire proximale 41' autour d'un axe parallèle à l'axe R3.

La nacelle 5 comprend un troisième manchon 51 adapté pour coopérer avec le deuxième boulon 44 du bras secondaire 4' articulé afin de former une liaison pivot. Le troisième manchon 51 est adapté pour solidariser en translation le bras secondaire 4' à la nacelle 5. Ainsi, la partie distale 42 du bras secondaire 4' est mobile en rotation par rapport à la nacelle 5 autour d'un axe parallèle à l'axe R3.

Le robot 3 comprend en outre au moins une deuxième buse d'injection 32. La deuxième buse d'injection 32 est centrée entre le nouveau manchon 51 et l'un des manchons 51 précédents. Le bras secondaire 4' permet que la droite passant par les buses d'injection 32 reste toujours parallèle à la deuxième direction X, améliorant la précision du robot 3. Le dispositif 25 de transfert comprend une nouvelle rangée 25c pour chaque nouvelle buse d'injection 32, augmentant ainsi la productivité du robot.

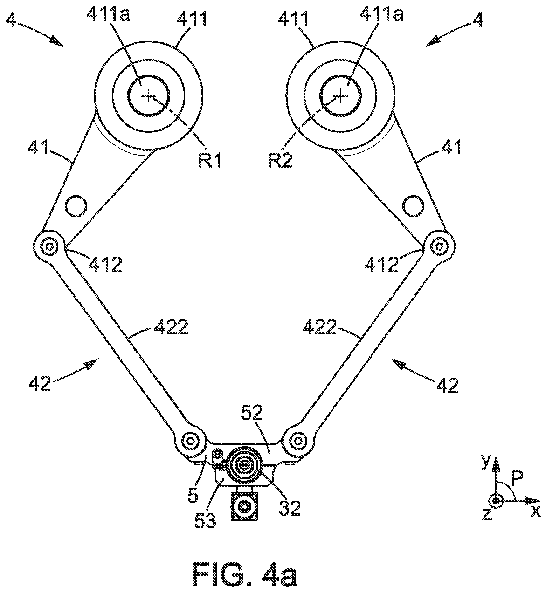

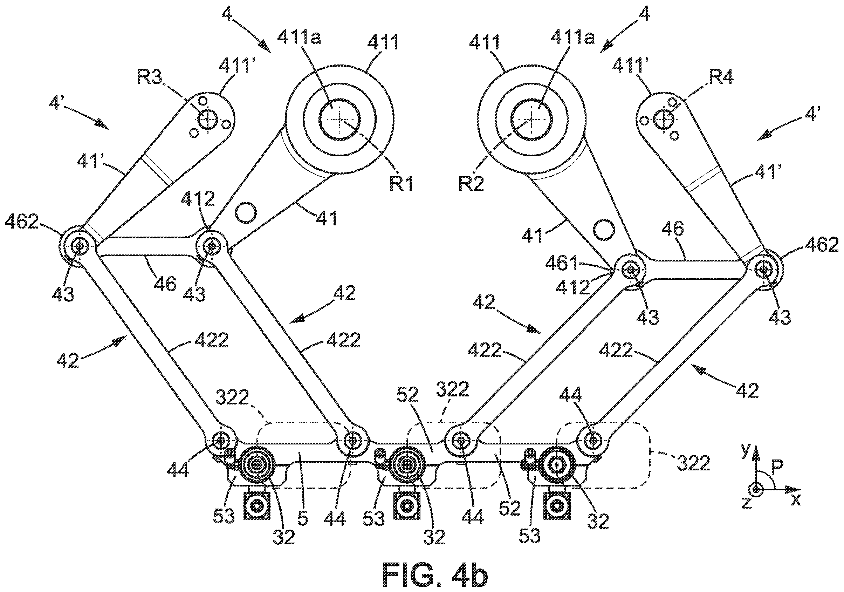

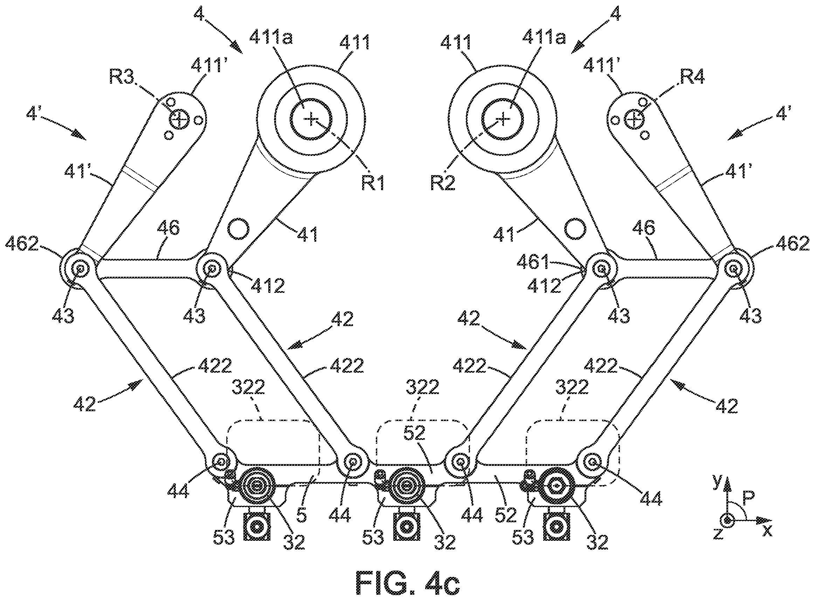

Optionnellement, le robot 3 peut comprendre un deuxième bras secondaire 4' identique structurellement au premier bras secondaire 4'. Le deuxième bras secondaire 4' est monté rotatif autour d'un axe R4, parallèle aux axes R1, R2 et R3, sur le support 31. Le deuxième bras secondaire 4' est lié en translation au deuxième bras 4 principal. Comme présenté à la figure 4c, le robot 3 comprend deux bras secondaires 4', chacun des bras secondaires 4' étant lié à un des deux bras 4 principaux. Chacun des deux bras secondaires 4' est respectivement solidaire en translation d'un des deux bras 4 principaux articulés.

La station 1 peut comprendre le robot 3 d'origine ou ledit robot 3 peut être monté sur une station de dépôt d'un cordon de matière déjà existante en remplacement d'une des parties de ladite station.

La nacelle 5 comprend un quatrième manchon 51 adapté pour coopérer avec le deuxième boulon 44 du deuxième bras secondaire 4' articulé afin de former une liaison pivot. Ainsi, la partie distale 42 du deuxième bras secondaire 4' est mobile en rotation par rapport à la bielle proximale 41 autour d'un axe parallèle à l'axe R4. Le quatrième manchon 51 est adapté pour solidariser en translation le deuxième bras secondaire 4' à la nacelle 5. Le robot 3 comprend en outre au moins une troisième buse d'injection 32. La troisième buse d'injection 32 est centrée entre le nouveau manchon 51 et l'un des manchons 51 précédents. Les deux bras secondaire 4' permettent que la droite passant par les buses d'injection 32 reste toujours parallèle à la deuxième direction X, améliorant la précision du robot 3. Le dispositif 25 de transfert comprend une nouvelle rangée 25c pour chaque nouvelle buse d'injection 32, augmentant ainsi la productivité du robot 3.

La station 1 de dépôt d'un cordon de matière peut en outre comprendre un processeur (non représenté). Le processeur peut commander le robot 3 selon au moins une trajectoire continue dans le plan X;Y. Plus particulièrement, le processeur peut commander d'une part la buse d'injection 32 du robot 3 selon au moins la trajectoire 322 continue dans le plan X ;Y et d'autre part commander l'injection du matériau sur les fonds 22 et/ou couvercles 23. En outre, le processeur peut commander la vitesse, linéaire et constante, à laquelle la buse d'injection 32 effectue la trajectoire 322 et/ou la quantité de matière injectée. Un exemple de vitesse de déplacement de la buse d'injection 32 selon la trajectoire 322 pourrait être de l'ordre de 2 mètres par seconde.

Le processeur peut en outre commander le dispositif 25 de transfert selon la première direction Y. Ainsi, le déplacement des fonds 22 et/ou des couvercles 23 présents sur le dispositif 25 de transfert est synchronisé avec l'injection du matériau afin de former le cordon de matériau de façon précise.

Le processeur peut comprendre une mémoire adaptée pour enregistrer une sélection de trajectoires 322 différentes. La mémoire peut en outre contenir une sélection de vitesses différentes. Ces vitesses peuvent être des vitesses de déplacement de la buse d'injection 32 pour effectuer la trajectoire 322 et/ou des vitesses d'injection de matière et/ou des vitesses de déplacement des fonds 22 et/ou des couvercles 23 selon la première direction Y. Le processeur peut être relié à une interface (non représentée), par exemple digitale, sur laquelle un opérateur peut créer et enregistrer une nouvelle trajectoire 322 et/ou une nouvelle vitesse, supprimer une trajectoire 322 et/ou une vitesse, choisir une trajectoire 322 et/ou une vitesse parmi une sélection pré-enregistrée. La possibilité de créer et enregistrer une nouvelle trajectoire 322 et/ou une nouvelle vitesse permet ainsi à l'opérateur d'ajuster finement la trajectoire 322 et/ou la vitesse pour s'adapter à des résultats non satisfaisants résultats, à un changement de viscosité du matériau de joint, à une nouvelle forme de fond 22 et/ou de couvercle 23, à une température extérieure différente ...

La station 1 de dépôt d'un cordon de matière peut en outre comprendre un dispositif de nettoyage (non représenté) des buses d'injection 32. Le dispositif de nettoyage comprend au moins une brosse de nettoyage. Plus particulièrement, le dispositif de nettoyage comprend une brosse de nettoyage par buse d'injection 32 comprise par le robot 3. L'au moins une brosse de nettoyage est mobile en translation selon la direction verticale Z entre une position de retrait dans laquelle elle se trouve à distance de la buse d'injection 32 et une position de nettoyage dans laquelle elle est au contact de la buse d'injection 32 afin de nettoyer l'ouverture de celle-ci. Le dispositif de nettoyage est adapté pour être utilisé lorsque le robot 3 est immobile. Pour effectuer ce nettoyage, la buse d'injection 32 va être déplacée vers une position hors de sa trajectoire de dépôt où la brosse de nettoyage est accessible. Ainsi, le processeur peut également comprendre une trajectoire de maintenance pré-programmée, selon laquelle la buse d'injection 32 est déplacée dans une position éloignée du dispositif de transfert 25.

Le fonctionnement du robot 3 va maintenant être décrit.

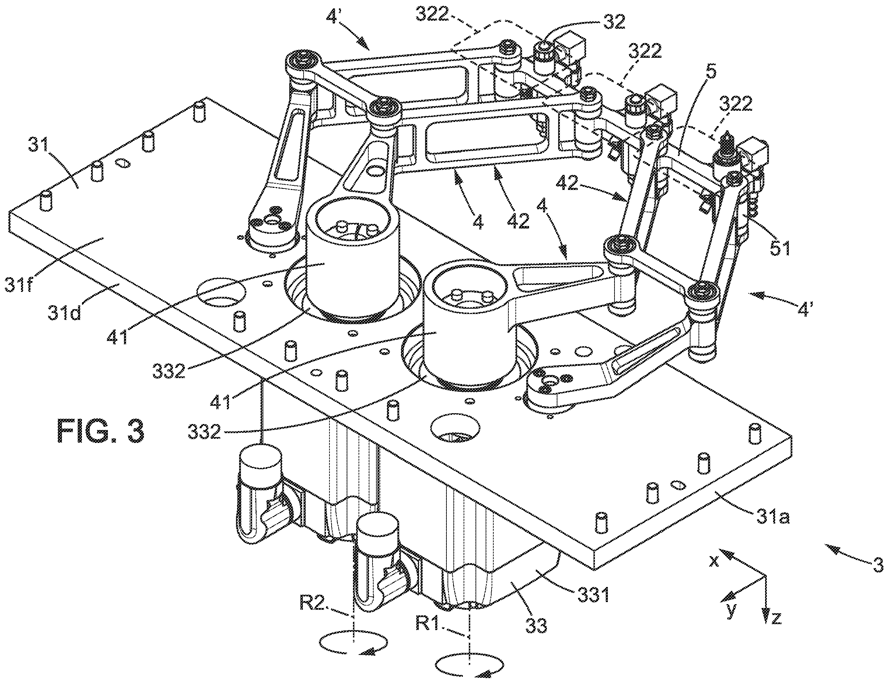

Comme visible sur les figures 2 et 3, les actionneurs 33 permettent respectivement d'entraîner en rotation les bielles proximales 41 des bras 4 articulés respectivement autour des axes R1 et R2 par rapport au support 31. Ceci a pour effet de déplacer le pied 412 des bielles proximales 41 selon des trajectoires circulaires, respectivement centrée sur l'axe R1 et l'axe R2, dans des plans sensiblement parallèles au plan X ;Y. Les rotations des actionneurs 33 sont indépendantes l'une de l'autre.

En outre, grâce aux liaisons pivots entre les bielles proximales 41 et les parties distales 42, le déplacement du pied 412 de chacune desdites bielles proximales 41 entraine le déplacement de la première extrémité 421a, 422a de chacun des montants 421, 422 des parties distales 42 selon les mêmes trajectoires circulaires. Les montants 421, 422 étant rigides et légers, ceci a pour effet de déplacer la deuxième extrémité 421b, 422b de chacun des montants 421, 422 tout en absorbant les fortes accélérations selon la première direction Y et la deuxième direction X.

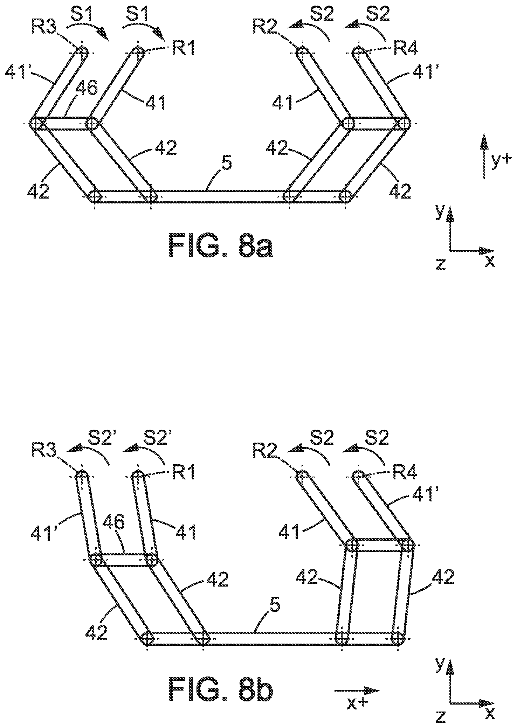

La nacelle 5 étant rigide et lié par une liaison pivot respectivement aux deuxièmes extrémités 421b, 422b des montants 421, 422 et les deux actionneurs 33 étant indépendants l'un de l'autre, l'actionnement de l'un et/ou des deux bras 4 articulés par les actionneurs 33 entraine le déplacement de la nacelle 5 sur la trajectoire 322 continue choisie. Les deux bras 4 articulés constituent deux chaînes cinématiques auxquelles correspondent deux degrés de liberté en translation de la nacelle 5, la première direction Y et la deuxième direction X. La nacelle 5 ne possède pas de degré de liberté en rotation. Les deux bras 4 articulés déplace la nacelle 5 dans le plan X ;Y. Ainsi, la nacelle 5 conserve son orientation dans l'espace par rapport au support 31. La nacelle 5 reste sensiblement parallèle au plan P et ne tourne pas par rapport au support 31. Plus particulièrement, la rotation des deux actionneurs 33 dans un sens de rotation opposé entraine le déplacement de la nacelle 5 uniquement selon la première direction Y. Par exemple, comme visible sur la figure 8a, une rotation **S1** dans un premier sens de rotation indirect du premier actionneur autour de l'axe R1 et une rotation **S2** dans un deuxième sens de rotation direct du deuxième actionneur autour de l'axe R2 entraine le déplacement de la nacelle 5 selon une direction Y+, c'est-à-dire selon la première direction Y vers les actionneurs 33. La rotation des deux actionneurs 33 dans un même sens de rotation entraine le déplacement de la nacelle 5 selon la première direction Y et selon la deuxième direction X et la rotation des deux actionneurs 33 dans un même sens de rotation et à une vitesse différente entraine le déplacement de la nacelle 5 uniquement selon la deuxième direction X. Par exemple, comme visible sur la figure 8b, une rotation **S2'** dans le deuxième sens de rotation direct et à une première vitesse de rotation du premier actionneur autour de l'axe R1 et la rotation S2 dans le deuxième sens de rotation direct et à une deuxième vitesse de rotation, différente de la première vitesse de rotation, du deuxième actionneur autour de l'axe R2 entraine le déplacement de la nacelle 5 selon une direction X+, c'est-à-dire selon la deuxième direction X vers la droite.

Lorsque le robot 3 comprend deux bras secondaires 4' articulés, le déplacement des bras 4 principaux entraine le déplacement des bras secondaires 4' par l'intermédiaire des barres de liaison 46. Les bras secondaire 4' sont adaptés pour maintenir en permanence la nacelle 5 parallèle à la deuxième direction X. plus particulièrement, la droite reliant les buses d'injection 32 solidaire de la nacelle 5 reste parallèle à la deuxième direction X afin d'assurer une trajectoire 322 précise pour chacune des buses d'injection 32. Cela permet au robot 3 de déposer un cordon de matière sur plusieurs fonds 22 et/ou couvercles 23 simultanément en parallèle. Ainsi, pour chaque bras secondaire 4' supplémentaire, la productivité du robot 3 est fortement augmentée (elle est par exemple multipliée par deux pour le premier bras secondaire 4' supplémentaire) et l'augmentation de l'encombrement du robot 3 est limitée (elle est sensiblement multipliée par une fois et demi pour le premier bras secondaire 4' supplémentaire).

Le fonctionnement de la station 1 va maintenant être décrit.

Une pluralité de fonds 22 et/ou de couvercles 23 est empilée dans le dispositif de dépilement 26. Un dispositif d'amené (non représenté) sort un à un les fonds 22 et/ou couvercles 23 du dispositif de dépilement 26 pour les déposer sur le dispositif 25 de transfert qui va les déplacer selon la première direction Y vers le dispositif d'étagement de sortie 27. Alternativement, le dispositif 25 de transfert déplace les fonds 22 et/ou les couvercles 23 selon la deuxième direction X vers le dispositif d'étagement de sortie 27. Un dispositif d'entrée (non représenté) retire un à un les fonds 22 et/ou couvercles 23 du dispositif 25 de transfert pour les emmagasiner dans le dispositif d'étagement de sortie 27.

Le dispositif 25 de transfert comprend autant de rangée 25c que le robot 3 comprend de buse d'injection 32. Lors du déplacement des fonds 22 et/ou couvercles 23 le long de la ou des rangées 25c du dispositif 25 de transfert, ceux-ci passent et s'arrêtent en-dessous du robot 3. Lors de cet arrêt, le robot 3 applique un cordon de matière à une vitesse continue sur l'une des faces de chacun des fonds 22 et/ou couvercles 23 sous-jacent. Alternativement, lors du déplacement le long du dispositif 25 de transfert, les fonds 22 et/ou couvercles 23 passent sans s'arrêter sous le robot 3. Le robot 3 se déplace alors selon la première direction Y pour suivre le mouvement des fonds 22 et/ou couvercles 23 et appliquer un cordon de matière à une vitesse continue sur l'une des faces de chacun des fonds 22 et/ou couvercles 23 sous-jacent.

Optionnellement, la station 1 comprend plusieurs robots 3 successif, par exemple deux robots 3, disposés en parallèle selon la première direction Y. Chacun des robots 3 effectue une partie complémentaire de la même trajectoire 322. Chacun des robots 3 effectue le dépôt d'une partie du cordon de matière à une vitesse continue sur l'une des faces de chacun des fonds 22 et/ou couvercles 23 sous-jacent. Le cordon de matière est complété par le ou les robots 3 suivants. Cette multiplication des robots 3 permet d'augmenter la vitesse de déplacement des fonds 22 et/ou des couvercles 23 sur le dispositif 25 de transfert et donc d'augmenter la productivité de la station 1.

Le processeur de la station 1 assure la synchronisation entre le déplacement des fonds 22 et/ou des couvercles 23 sous le robot et l'application du cordon de matière sur l'une des faces desdits fonds 22 et/ou couvercles 23.

La station 1 qui vient d'être décrite est adaptée pour être installée en parallèle d'une ligne de fabrication (non représentée) de récipients 2 métalliques telle que connue de l'état de la technique. Plus particulièrement, les fonds 22 et/ou couvercles 23 sortant de la station 1 sont destinés à venir alimenter la ligne de fabrication de récipients 2.

Cette ligne de fabrication de récipients 2 est composée de postes individuels agencés de façon modulaire les uns à la suite des autres pour réaliser les opérations de formage et d'assemblage des récipients 2 tels que des seaux et bidons métalliques. Ainsi, la ligne de fabrication de récipients 2 peut comprendre une ou plusieurs stations parmi les stations suivantes : une station de formage dans laquelle le corps 21 des récipients 2 est formé, un dispositif d'amené des fonds 22 précédemment jointés dans la station 1, une première station de sertissage dans laquelle chacun des fonds 22 jointés est sertie sur un des corps 21, un dispositif de retournement automatique adapté pour retourner les corps 21, un dispositif d'amené des couvercles 23 précédemment jointés dans la station 1, une deuxième station de sertissage dans laquelle chacun des couvercles 23 jointés est sertie sur un des corps 21.

## Revendications

1. Station (1) de dépôt d'un cordon de matière sur un couvercle (23) et/ou un fond (22) destiné à un récipient (2) métallique, ladite station comprenant :
- un dispositif (25) de transfert adapté pour déplacer les couvercles et/ou fonds selon une première direction (Y), et
- un robot (3) parallèle comprenant :
- un support (31),
- deux bras (4) articulés montés rotatifs sur le support,
- deux actionneurs (33), chacun des actionneurs étant adapté pour entrainer en rotation l'un des bras articulés,
- une nacelle (5) montée rotative sur les bras articulés,
- au moins une buse d'injection (32) solidaire de la nacelle, l'au moins une buse s'étendant selon une direction verticale (Z) perpendiculaire à la première direction (Y) et étant adaptée pour déposer un cordon de matériau susceptible de former un joint d'étanchéité sur le couvercle et/ou le fond sous-jacent déplacé par le dispositif de transfert,
l'un des deux bras (4) étant monté rotatif autour d'un premier axe (R1) sur le support et l'autre des deux bras (4) étant monté rotatif autour d'un deuxième axe (R2) sur le support, le premier axe (R1) et le deuxième axe (R2) étant parallèles à la direction verticale (Z), ladite nacelle étant mobile en translation par rapport au support selon la première direction (Y) et selon une deuxième direction (X), perpendiculaire à la première direction (Y) et à la direction verticale (Z), et étant solidaire en translation par rapport au support selon la direction verticale (Z), et la station de dépôt comprenant en outre un processeur commandant le robot, selon au moins une trajectoire (322) continue dans un plan (X ;Y), comprenant la première direction (Y) et la deuxième direction (X), stockée dans ledit processeur.

2. Station (1) selon la revendication 1, dans lequel le processeur commande l'au moins une buse d'injection (32) du robot (3) à une vitesse linéaire constante.

3. Station (1) selon la revendication 1 ou la revendication 2, dans lequel chaque bras (4) articulé du robot (3) comprend :
- une bielle proximale (41) montée rotative sur le support (31), et
- une partie distale (42) s'étendant entre une première extrémité (421a, 422a) et une deuxième extrémité (421b, 422b),
la partie distale étant liée par une liaison pivot à au moins un élément parmi la bielle proximale (41) et la nacelle (5).

4. Station (1) selon la revendication 3, dans lequel la première extrémité (421a, 422a) de la partie distale (42) comprend un premier orifice circulaire,
et dans lequel la bielle proximale (41) s'étend entre une tête (411) et un pied (412) présentant un alésage (412a) circulaire,
la liaison pivot assurant la liaison entre la partie distale et la bielle proximale étant réalisée par un premier boulon (43) traversant le premier orifice de la partie distale et l'alésage de la bielle proximale.

5. Station (1) selon la revendication 3 ou la revendication 4, dans lequel la deuxième extrémité (421b, 422b) de la partie distale (42) comprend un deuxième orifice (424) circulaire,
et dans lequel la nacelle (5) comprend au moins un manchon (51) s'étendant sensiblement selon la direction verticale (Z),
la liaison pivot assurant la liaison entre la partie distale et la nacelle étant réalisée par un deuxième boulon (44) traversant le deuxième orifice de la partie distale et l'au moins un manchon (51) de la nacelle.

6. Station (1) selon la revendication 4 ou la revendication 5, dans lequel au moins l'une parmi la liaison pivot assurant la liaison entre la partie distale (42) et la bielle proximale (41) et la liaison pivot assurant la liaison entre la partie distale (42) et la nacelle (5) comprend en outre au moins un palier à roulement (444).

7. Station (1) selon l'une quelconque des revendications 3 à 6, dans lequel la partie distale (42) de chaque bras (4) articulé du robot (3) comprend deux montants (421, 422) symétriques s'étendant chacun entre une première extrémité (421a, 422a) et une deuxième extrémité (421b, 422b), la première extrémité (421a, 422a) de chaque montant (421, 422) comprenant un premier orifice circulaire et la deuxième extrémité (421b, 422b) de chaque montant (421, 422) comprenant un deuxième orifice (424) circulaire.

8. Station (1) selon l'une quelconque des revendications précédentes, dans lequel le robot (3) comprend en outre au moins un bras secondaire (4') articulé monté rotatif sur le support (31), ledit bras secondaire comprenant une barre de liaison (46) solidarisant en translation le bras secondaire à l'un des bras (4) principaux articulés du robot.

9. Station (1) selon l'une quelconque des revendications précédentes, dans lequel le dispositif (25) de transfert comprend une pluralité de rangées (25c) parallèles convoyant chacune des fonds (22) et/ou des couvercles (23) selon la première direction (Y), et dans lequel le robot (3) comprend une buse d'injection (32) par rangée (25c).

10. Station (1) selon l'une quelconque des revendications précédentes, dans lequel la nacelle (5) du robot (3) comprend une embase (52) et au moins une accroche (53) vissée à l'embase, ladite au moins une accroche étant adaptée pour solidariser l'au moins une buse d'injection (32) à l'embase.

## Patentansprüche

1. Station (1) zum Ablagern eines Materialstreifens auf einen für einen Metallbehälter (2) vorgesehenen Deckel (23) und/oder Boden (22), wobei die Station aufweist:
- eine Fördervorrichtung (25) angepasst zum Transportieren der Deckel und/oder Böden in eine erste Richtung (Y) und
- einen Parallelroboter (3) aufweisend:
* ein Untergestell (31),
* zwei an dem Untergestell drehbar angebrachte Gelenkarme (4),
* zwei Aktuatoren (33), wobei jeder der Aktuatoren angepasst ist, um einen der Gelenkarme in Drehung zu versetzen,
* ein an den Gelenkarmen drehbar angebrachtes Schiffchen (5),
* mindestens eine mit dem Schiffchen fest verbundene Injektionsdüse (32),
wobei:
die mindestens eine Düse sich in eine vertikale Richtung (Z), die senkrecht zur ersten Richtung (Y) ist, erstreckt und angepasst ist, um einen zur Bildung einer Abdichtung geeigneten Materialstreifen auf den darunter angeordneten Deckel und/oder Boden, der von der Fördervorrichtung heran transportiert worden ist, aufzutragen,
einer der zwei Arme (4) um eine erste Achse (R1) drehbar an dem Untergestell angebracht ist und der andere der zwei Arme (4) um eine zweite Achse (R2) drehbar an dem Untergestell angebracht ist, wobei die erste Achse (R1) und die zweite Achse (R2) parallel zur vertikalen Richtung (Z) sind,
das Schiffchen bezüglich des Untergestells in die erste Richtung (Y) und in eine zweite Richtung (X), die senkrecht zur ersten Richtung (Y) und zur vertikalen Richtung (Z) ist, linear verschiebbar ist und bezüglich des Untergestells in die vertikale Richtung (Z) fest verbunden ist, und
die Auftragungsstation ferner einen Prozessor aufweist, der den Roboter gemäß mindestens einer in dem Prozessor gespeicherten, kontinuierlichen Trajektorie (322) steuert, die in einer Ebene (X; Y) liegt, die die erste Richtung (Y) und die zweite Richtung (X) enthält.

2. Station (1) nach Anspruch 1, wobei der Prozessor die mindestens eine Injektionsdüse (32) des Roboters (3) mit einer konstanten linearen Geschwindigkeit steuert.

3. Station (1) nach Anspruch 1 oder Anspruch 2, wobei jeder Gelenkarm (4) des Roboters (3) aufweist:
- ein an dem Untergestell (31) drehbar angebrachtes proximales Pleuel (41) und
- einen sich zwischen einem ersten Ende (421a, 422a) und einem zweiten Ende (421b, 422b) erstreckenden distalen Teil (42),
wobei der distale Teil mit mindestens einem Element, ausgewählt aus dem proximalen Pleuel (41) und dem Schiffchen (5), über eine Zapfverbindung verbunden ist.

4. Station (1) nach Anspruch 3, wobei das erste Ende (421a, 422a) des distalen Teils (42) eine erste kreisförmige Öffnung aufweist und wobei das proximale Pleuel (41) sich zwischen einem Kopf (411) und einem mit einer kreisförmigen Bohrung (412a) versehenen Fuß (412) erstreckt, wobei die Zapfverbindung, die die Verbindung zwischen dem distalen Teil und dem proximalen Pleuel sicherstellt, aus einem ersten Bolzen (43) gebildet wird, der durch die erste Öffnung des distalen Teils und die Bohrung des proximalen Pleuels hindurchgeht.

5. Station (1) nach Anspruch 3 oder Anspruch 4, wobei das zweite Ende (421b, 422b) des distalen Teils (42) eine zweite kreisförmige Öffnung (424) aufweist und wobei das Schiffchen (5) mindestens eine sich im Wesentlichen in die vertikale Richtung (Z) erstreckende Manschette (51) aufweist, wobei die Zapfverbindung, die die Verbindung zwischen dem distalen Teil und dem Schiffchen sicherstellt, aus einem zweitem Bolzen (44) gebildet wird, der durch die zweite Öffnung des distalen Teils und die mindestens eine Manschette (51) des Schiffchens hindurchgeht.

6. Station (1) nach Anspruch 4 oder Anspruch 5, wobei die Zapfverbindung, die die Verbindung zwischen dem distalen Teil (42) und dem proximalen Pleuel (41) sicherstellt, und/oder die Zapfverbindung, die die Verbindung zwischen dem distalen Teil (42) und dem Schiffchen (5) sicherstellt, ferner mindestens ein Wälzlager (444) aufweist.

7. Station (1) nach einem der Ansprüche 3 bis 6, wobei der distale Teil (42) jedes Gelenkarms (4) des Roboters (3) zwei symmetrische Streben (421, 422) aufweist, die sich jeweils zwischen einem ersten Ende (421a, 422a) und einem zweiten Ende (421b, 422b) erstrecken, wobei das erste Ende (421a, 422a) jeder Strebe (421, 422) eine erste kreisförmige Öffnung aufweist und das zweite Ende (421b, 422b) jeder Strebe (421, 422) eine zweite kreisförmige Öffnung (424) aufweist.

8. Station (1) nach einem der vorstehenden Ansprüche, wobei der Roboter (3) ferner mindestens einen an dem Untergestell (31) drehbar angebrachten sekundären Gelenkarm (4') aufweist, der eine Verbindungsstange (46) aufweist, die den sekundären Arm mit einem der Hauptgelenkarme (4) des Roboters translationsfest verbindet.

9. Station (1) nach einem der vorstehenden Ansprüche, wobei die Fördervorrichtung (25) mehrere parallele Reihen (25c) aufweist, die jeweils Böden (22) und/oder Deckel (23) in die erste Richtung (Y) transportieren, und wobei der Roboter (3) eine Injektionsdüse (32) pro Reihe (25c) aufweist.

10. Station (1) nach einem der vorstehenden Ansprüche, wobei das Schiffchen (5) des Roboters (3) eine Basis (52) und mindestens eine an der Basis angeschraubte Koppeleinrichtung (53) aufweist, wobei die mindestens eine Koppeleinrichtung konfiguriert ist, um die mindestens eine Injektionsdüse (32) mit der Basis zu verbinden.

## Claims

1. Station (1) for depositing a strip of material onto a cover (23) and/or a base (22) intended for a metal container (2), said station comprising:
- a transfer device (25) designed for moving the covers and/or bases in a first direction (Y), and
-- a parallel robot (3) comprising:
-- a support (31),
-- two articulated arms (4) mounted so as to be able to rotate on the support,
- two actuators (33), with each one of the actuators being designed to drive in rotation one of the articulated arms,
-- a nacelle (5) mounted so as to be able to rotate on the articulated arms,
-- at least one injection nozzle (32) integral with the nacelle, with the at least one nozzle extending in a vertical direction (Z) perpendicular to the first direction (Y) and being designed to deposit a strip of material able to form a seal on the cover and/or the underlying base moved by the transfer device,
with one of the two arms (4) being mounted so as to be able to rotate about a first axis (R1) on the support and the other of the two arms (4) being mounted so as to be able to rotate about a second axis (R2) on the support, the first axis (R1) and the second axis (R2) being parallel to the vertical direction (Z), said nacelle being mobile in translation in relation to the support in the first direction (Y) and in a second direction (X), perpendicular to the first direction (Y) and to the vertical direction (Z), and being integral in translation with respect to the support in the vertical direction (Z), the station for depositing further comprising a processor controlling the robot, according to at least one continuous trajectory (322) in a plane (X;Y), comprising the first direction (Y) and the second direction (X), stored in said processor.

2. Station (1) according to claim 1, wherein the processor controls the at least one injection nozzle (32) of the robot (3) at a constant linear speed.

3. Station (1) according to claim 1 or claim 2, wherein each articulated arm (4) of the robot (3) comprises:
- a proximal connecting rod (41) mounted so as to be able to rotate on the support (31), and
- a distal portion (42) extending between a first end (421a, 422a) and a second end (421b, 422b),
with the distal portion being connected by a pivot connection to at least one element among the proximal connecting rod (41) and the nacelle (5).

4. Station (1) according to claim 3, wherein the first end (421a, 422a) of the distal portion (42) comprises a first circular orifice,
and wherein the proximal connecting rod (41) extends between a head (411) and a foot (412) having a circular bore (412a),
with the pivot connection providing the connection between the distal portion and the proximal connecting rod being carried out by a first bolt (43) passing through the first orifice of the distal portion and the bore of the proximal connecting rod.

5. Station (1) according to claim 3 or claim 4, wherein the second end (421b, 422b) of the distal portion (42) comprises a second circular orifice (424),
and wherein the nacelle (5) comprises at least one sleeve (51) extending substantially in the vertical direction (Z),
the pivot connection providing the connection between the distal portion and the nacelle being carried out by a second bolt (44) passing through the second orifice of the distal portion and the at least one sleeve (51) of the nacelle.

6. Station (1) according to claim 4 or the claim 5, wherein at least one among the pivot connection providing the connection between the distal portion (42) and the proximal connecting rod (41) and the pivot connection providing the connection between the distal portion (42) and the nacelle (5) further comprises at least one roller bearing (444).

7. Station (1) according to any of claims 3 to 6, wherein the distal portion (42) of each articulated arm (4) of the robot (3) comprises two symmetrical uprights (421, 422) each extending between a first end (421a, 422a) and a second end (421b, 422b), the first end (421a, 422a) of each upright (421, 422) comprising a first circular orifice and the second end (421b, 422b) of each upright (421, 422) comprising a second circular orifice (424).

8. Station (1) as claimed in any preceding claim, wherein the robot (3) further comprises at least one secondary articulated arm (4') mounted so as to be able to rotate on the support (31), said secondary arm comprising a connecting bar (46) rending integral in translation the secondary arm with one of the main articulated arms (4) of the robot.

9. Station (1) as claimed in any preceding claim, wherein the transfer device (25) comprises a plurality of parallel rows (25c) conveying each one of the bases (22) and/or covers (23) in the first direction (Y), and wherein the robot (3) comprises one injection nozzle (32) per row (25c).

10. Station (1) as claimed in any preceding claim, wherein the nacelle (5) of the robot (3) comprises a base (52) and at least one hook (53) screwed to the base, said at least one hook being designed to make integral the at least one injection nozzle (32) with the base.
